# EUROPÄISCHE PATENTANMELDUNG

(11) **EP 1 167 854 A1**
(43) Veröffentlichungstag der Anmeldung: **02.01.2002**
(21) Anmeldenummer: 01111803.1
(22) Anmeldetag: 16.05.2001
(51) Int. Cl.: F16L 21/03, B28B 21/56

(54) **Dichtung für eine Steckmuffenverbindung**

(30) Priorität: 23.06.2000 DE 10030750
(71) Anmelder: LWM Werkzeug- und Maschinenbau GmbH, 49393 Lohne (DE)
(72) Erfinder: Lamping, Alwin, 49393 Lohne (DE)
(74) Vertreter: Meyer, Ludgerus A.

(57) **Zusammenfassung**

Die Erfindung betrifft einen Dichtring für eine Steckmuffenverbindung, insbesondere von Betonrohren, die mehrere umlaufende Stützstege zwischen Außenprofil und Innenprofil aufweist. Erfindungsgemäß ist das Außenprofil der Dichtung jeweils in radialer Richtung der Stützstege (14, 15, 16) mit um die Dichtung umlaufenden Verankerungsfüßen (18, 19, 20) versehen, welche so ausgebildet sind, daß sie bei der Herstellung des Muffenendes in die Wand der Muffe eingreifen können.

## Beschreibung

Die Erfindung betrifft eine Dichtung für eine Steckmuffenverbindung, insbesondere von Betonrohren, nach dem Oberbegriff des Anspruchs 1.

Im Kanalbau werden in der Regel Betonrohre verwendet, welche aufgrund ihres großen Durchmessers einfacher als Kunststoffrohre hergestellt werden können. Zur Abdichtung ineinander zu steckender Rohre wird entweder Mörtel verwendet oder es werden elastische Dichtringe eingesetzt

Zur Erleichterung der Montage werden die elastischen Dichtringe in der Regel bereits während der Herstellung der Betonrohre in die entsprechenden Muffen eingearbeitet. Um die Dichtungen unverlierbar zu machen, weisen sie Verankerungsfüße auf, die in ringförmige Ausnehmungen der Muffen eingreifen. Das Spitzende eines Rohres kann daher vor Ort in das passende Muffenende eines anderen Rohres eingeschoben werden, ohne daß dabei ein manueller Einsatz eines Dichtringes erforderlich wäre.

Aus der EP 449 082 A2 ist eine Steckmuffenverbindung bekannt, bei der ein bereits während der Herstellung des Rohres einbetonierbarer Dichtring verwendet ist. Dieser weist in Umfangsrichtung gesehen mehrere kreisförmige Hohlräume auf, die sich bis in den Bereich der Spiegelfläche der Muffe erstrecken. Im vorderen Bereich der Dichtung sind keine Hohlräume vorhanden. Die Herstellung der Hohlräume hat sich als schwierig erwiesen.

Aus der DE 33 45 569 C2 ist bekannt, eine Steckmuffenverbindung für Betonrohre so auszubilden, daß Stützstege zwischen einem Außen- und einem Innenprofil der Dichtung die Druckkräfte auffangen, die beim Einbetonieren der Dichtung entstehen.

Schließlich ist aus der DE 42 37 645 C1 eine Steckmuffenverbindung bekannt, bei der die Dichtung einen einzigen Hohlraum mit einer im wesentlichen über die gesamte in Axialrichtung verlaufenden Länge aufweist. Die Dichtung weist in dem Hohlraum in Rohrumfangsrichtung beidseitig zur Hohlraumachse hin gerichtete Rippen auf, die in Axialrichtung einen derartigen Abstand zueinander aufweisen, daß bei Zusammenstecken zweier Rohre die der Muffeninnenseite abgewandte Seite der Dichtung in Axialrichtung so weit verschoben wird, daß die Rippen der einen Seite der Dichtung in Zwischenräume der anderen Seite der Dichtung eintreten.

Während mit den zuvor genannten Dichtungen das fabrikmäßige Herstellen der Betonrohre mit eingesetzten Dichtungen so durchgeführt werden kann, daß die Dichtungen während des Betoniervorgangs nicht zusammengedrückt werden, wurde dem Verhalten einer solchen Dichtung bei der Entformung nach der Herstellung des Betonrohres sowie dem Zusammenstecken zweier Rohre zu wenig Beachtung geschenkt, so daß es immer wieder vorkam, daß sich Dichtungen aus einer Muffe lösten oder beim Zusammenstecken zweier Rohre keine ordnungsgemäße Dichtung erfolgte.

Der Erfindung liegt daher die Aufgabe zugrunde, eine Dichtung für eine Steckmuffenverbindung, insbesondere für Betonrohre, anzugeben, welche eine erhöhte Sicherheit gegen Lösen aus der Rohrmuffe bietet und welche auch beim Zusammenstecken zweier Rohre eine hohe Montage- und Dichtungssicherheit gewährleistet.

Diese Aufgabe wird durch die in Anspruch 1 angegebene Erfindung gelöst. Vorteilhafte Weiterbildungen der Erfindung sind in Unteransprüchen angegeben.

Bei einer Dichtung der im Oberbegriff des Anspruchs 1 angegebenen Art, welche mehrere durch umlaufende Stützstege zwischen Außenprofil und Innenprofil verlaufende, voneinander getrennte Hohlkammem aufweist, ist erfindungsgemäß das Außenprofil der Dichtung mit jeweils in radialer Verlängerung der Stützprofile um die Dichtung umlaufenden Verankerungsfüßen versehen, welche so ausgebildet sind, daß sie bei der Herstellung des Muffenendes eines Rohres in die Wand der Muffe eingreifen können.

Durch diese Maßnahme wird erreicht, daß das Außenprofil der Dichtung an mehreren umlaufenden Stellen fest mit dem Muffengrund verbunden wird, so daß bei Abziehen der Untermuffe nach einem Betoniervorgang nicht die Gefahr besteht, daß sich die Dichtung aus der Muffe löst.

Auf der anderen Seite besteht nicht die Gefahr, daß beim Zusammenstecken zweier Rohre, von denen das muffenseitige Ende eines Rohres eine erfindungsgemäße Dichtung aufweist, die Dichtung durch das möglicherweise mit Größtmaß ausgebildete Spitzende des einzusteckenden Rohres in die Muffe hineingedrückt wird und damit eine fehlerhafte Dichtung hervorruft. Die Feststellung und Behebung eines solchen Fehlers kann insbesondere bei Betonrohren mit großem Durchmesser zu hohen Schäden führen.

Der Vorteil der erfindungsgemäßen Dichtung liegt auch darin, daß die Materialmenge zur Herstellung einer solchen Dichtung geringer ist als bei vergleichbaren Dichtungen des Standes der Technik, da keine zusätzlichen abstehenden Verankerungsfüße mehr erforderlich sind.

In einer bevorzugten Ausführungsform der Erfindung sind die Verankerungsfüße im Querschnitt im wesentlichen schwalbenschwanzförmig ausgebildet, wobei die Basislinien der Dreiecke in der Ebene der Außenseite des Außenprofils der Dichtung verlaufen und die Spitzen der Dreiecke jeweils in größeren dreieckförmigen Vertiefungen der Außenseite der Außenprofile verankert sind.

Dadurch kann die Außenseite der Dichtung im wesentlichen zylindrisch ausgestaltet sein, so daß Herstellung und Lagerung der Dichtung erleichtert ist und der Materialverbrauch minimiert wird.

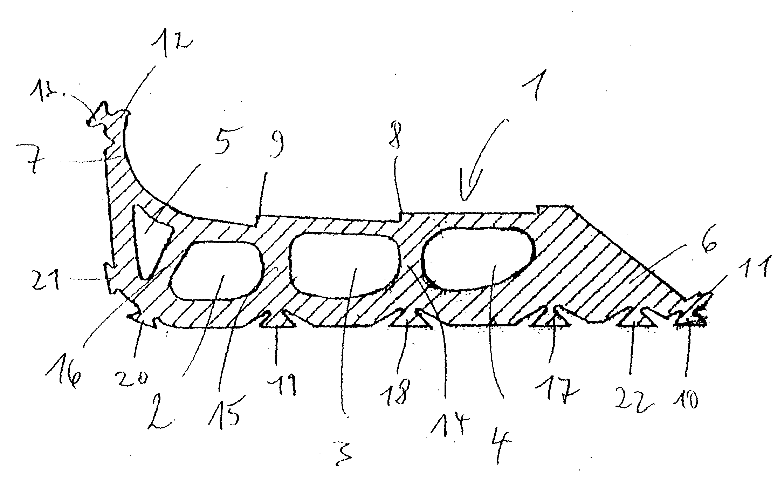

Die Erfindung wird nachstehend anhand eines Ausführungsbeispiels näher erläutert. Die einzige Figur zeigt eine erfindungsgemäße Dichtung in Schnittbild.

Die dargestellte Dichtung ist als umlaufende Dichtung ausgebildet und in das Muffenende eines Betonrohres einsetzbar. Um die Dichtung bereits bei der Herstellung des Betonrohres in die Muffe einsetzen zu können, wird die Dichtung zunächst mit dem Innenprofil auf eine Untermuffe aufgezogen. Dann erfolgt die Betonierung. Da zwischen Innenprofil und Außenprofil Stützstege vorgesehen sind, kann das Außenprofil trotz Vorhandenseins der Hohlkammem im Profil nicht zusammengedrückt werden. Die Verankerungsfüße des Profils werden bei der Betonierung von Beton umschlossen und halten die Dichtung nach Erstarren des Betons in Position. Nach Entfernung der Untermuffe ist die Dichtung gebrauchsfertig in der Betonrohrmuffe eingesetzt und es kann das Spitzende eines zweiten Rohres in die Muffe eingeschoben werden.

Die erfindungsgemäße Dichtung 1 enthält mehrere Hohlkammem 2-5 zwischen Innenprofil und Außenprofil. Diese Hohlkammem erlauben einerseits eine Reduzierung des Materialbedarfs und andererseits ergeben sie insbesondere einen Kompressionsbereich beim Zusammenstecken zweier Rohre. Um eine ausreichende Dichtfunktion der Dichtung zu erzielen, ist ein ohne Hohlraum ausgebildeter Auflaufbereich 6 vorgesehen, welcher die nötige Andruckkraft beim Zusammenstecken zweier Rohre erzeugt. Im Spiegelbereich der Muffe weist die Dichtung einen Anschlagbereich 7 auf, welcher einen kleineren Durchmesser als der übrige Dichtbereich der Dichtung 1 aufweist, so daß beim Zusammenstecken zweier Rohre das Spitzende des einzusteckenden Rohres gegen den Anschlagbereich 7 anstößt. Dadurch wird eine unmittelbare Kontaktverbindung zwischen zwei zusammengesteckten Rohren verhindert.

Um die Dichtfunktion der Dichtung weiter zu erhöhen, sind auf der Innenseite des Innenprofils zwei umlaufende Abstreiflippen 8 und 9 vorgesehen.

Zur Verankerung der Dichtung in der Muffe weist der Auflaufbereich eine etwa dreieckförmige Einlaßverankerung 10 sowie eine vordere Nase 11 auf, die im Eingangsbereich der Muffe im Muffengrund verankert sind. Die Einlaßverankerung 10 sowie die vordere Nase 11 verhindern das Herauswölben der Dichtung beim Einstecken des Spitzendes eines zweiten Rohres. Der Verankerungsfuß 22 unterstützt die Funktion der Einlaßverankerung 10 sowie der vorderen Nase 11.

Am rückwärtigen Ende der Dichtung sind eine Endnase 12 sowie eine Endverankerung 13 vorgesehen, welche das Ende der Dichtung im Spiegelbereich des Muffenbereichs verankert.

Zwischen Innenprofil und Außenprofil der Dichtung sind Stützstege 14, 15 und 16 vorgesehen, deren Funktion im wesentlichen nur bei der Herstellung der Betonrohrmuffe erforderlich ist, indem sie Außenprofil und Innenprofil beim Betonieren gegeneinander abstützen. Zwischen den Stützstegen befinden sich die Hohlräume 2 - 5.

Das Außenprofil der Dichtung weist mehrere umlaufende Verankerungsfüße 17 - 21 auf, welche im wesentlichen schwalbenschwanz- oder dreieckförmig ausgebildet sind und in umlaufenden dreieckförmigen Ausnehmungen des Außenprofils verankert sind. Zwischen dem Außenprofil und den dreieckförmigen Verankerungsfüßen sind jeweils beidseitig der Verankerungsfüße keilförmige Vertiefungen ausgebildet, die bei der Betonierung mit Beton ausgefüllt werden. Die Verankerungsfüße bilden daher in etwa schwalbenschwanzförmige Verankerungen, welche ein Lösen der Dichtung aus der Muffe verhindern.

Die Verankerungsfüße befinden sich in radialer Richtung zu den Stützstegen 14, 15 und 16, so daß verhindert wird, daß beim Einschieben eines Spitzendes eines Rohres durch seitliches Wegdrücken der Stützstege 14, 15, 16 ein Lösen des Außenprofils der Dichtung vom Muffengrund auftreten kann. Der Vorteil dieser Verankerungsfüße liegt auch darin, daß beim Entfernen der Untermuffe bei der Herstellung des Betonrohres ein fester Sitz zwischen dem Betonrohr und der Dichtung gewährleistet bleibt.

Da die Verankerungsfüße in Ausnehmungen des Außenprofils aufgenommen sind, kann die Dichtung so hergestellt werden, daß im wesentlichen keine vorstehenden Teile am Außenprofil vorhanden sind. Dadurch läßt sich das Profil bei der Herstellung besser handhaben, da die Dichtung, welche als endloser Strang hergestellt wird, ohne Probleme auf einer flachen Unterlage abgelegt werden kann. Das Fehlen von vorstehenden Stützfüßen, wie sie bei den Dichtungen des Standes der Technik vorhanden sind, reduziert auch den Materialbedarf.

Die erfindungsgemäß Dichtung kann auch nachträglich in ein Betonrohr eingeschoben werden, da sie mit ihrem Außenprofil im wesentlichen zylindrisch ausgeführt ist. Das nachträgliche Einsetzen einer Dichtung kann erforderlich werden, wenn eine bei der Herstellung bereits eingesetzte Dichtung durch äußere Einwirkungen beschädigt wurde und die Dichtung zu ersetzen ist. Die Dichtungen der eingangs im Stand der Technik genannten Art können zu diesem Zweck nicht verwendet werden.

### Bezugszeichen

- 1: Dichtung
- 2-5: Hohlräume
- 6: Auflaufbereich
- 7: Anschlagbereich
- 8: Abstreiflippe
- 9: Abstreiflippe
- 10: Einlaßverankerung
- 11: vordere Nase
- 12: Endnase
- 13: Endverankerung
- 14: Stützsteg
- 15: Stützsteg
- 16: Stützsteg
- 17-22: Verankerungsfüße

## Patentansprüche

1. Dichtring für eine Steckmuffenverbindung, insbesondere von Betonrohren, welcher als umlaufende Dichtung bei der Herstellung des Muffenendes einer Rohrmuffe einsetzbar ist, wobei die Dichtung (1) mehrere durch umlaufende Stützstege (14, 15, 16) zwischen Außenprofil und Innenprofil der Dichtung verlaufende voneinander getrennte Hohlkammern (2-5) aufweist, **dadurch gekennzeichnet, daß** das Außenprofil der Dichtung jeweils in radialer Verlängerung der Stützprofile (14, 15, 16) um die Dichtung umlaufende Verankerungsfüße (17, 18, 19, 20) aufweist, welche so ausgebildet sind, daß sie bei der Herstellung des Muffenendes in die Wand der Muffe eingreifen können.

2. Dichtung nach Anspruch 1, **dadurch gekennzeichnet, daß** die Verankerungsfüße (17 - 20) im Querschnitt im wesentlichen schwalbenschwanzförmig ausgebildet sind, wobei die Basislinien der Verankerungsfüße in der Ebene der Außenseite des Außenprofils der Dichtung verlaufen und die Verbindungsspitzen der Verankerungsfüße jeweils in dreieckförmigen Vertiefungen der Außenseite der Außenprofile verankert sind.

3. Verwendung einer Dichtung nach Anspruch 1 oder 2 zur Herstellung von Betonrohren mit eingesetzter Dichtung.
